# EUROPEAN PATENT APPLICATION

(11) **EP 2 284 836 A1**
(43) Date of publication of application: **16.02.2011**
(21) Application number: 10251031.0
(22) Date of filing: 03.06.2010
(51) Int. Cl.: G11B 20/00, G06F 21/00, H04N 5/76

(54) **Output control method, receiver, and receiving method using license acquisition time limit information**

(30) Priority: 10.07.2009 JP 2009163263; 10.07.2009 JP 2009163264
(71) Applicant: Hitachi Consumer Electronics Co. Ltd., Tokyo 100-0004 (JP)
(72) Inventor: Tsuruga, Sadao, Chiyoda-ku, Tokyo 100-8220 (JP); Okamoto, Hiroo, Chiyoda-ku, Tokyo 100-8220 (JP)
(74) Representative: Hackney, Nigel John

(57) **Abstract**

When recording a Copy One Generation digital broadcast program, ease of operation is improved while applying copy control. Digital content, metadata describing information about the digital content, and license acquisition time limit information indicating a time limit until which license information on the digital content can be acquired, are received. The digital content, the metadata, and the license acquisition time limit information are recorded, and if the time limit indicated by the license acquisition time limit information has elapsed, the recorded digital content is not outputted.

## Description

### 1. Field of the Invention

The technical field relates to copy control of content.

### 2. Description of the Related Art

With regard to the above-mentioned technical field, Japanese Patent Application Laid-open 2002-319227 states as follows as the problem to be solved: "To improve ease of operation when recording information permitted to be copied for only one generation (Copy One Generation) by rewriting the information into information whose further copying is prohibited (Copy No More)", and states as follows as the solution to the problem: "Only one generation of copying is allowed (Copy One Generation) within a predetermined period of time after recording, thereby compensating for cases where recording is interrupted due to some troubles or the like at the time of recording. In addition, two identical streams are recorded on a medium, of which one is used for normal viewing and the other is moved and saved to another medium as necessary".

Recently, with the expansion of digital broadcasting services, recorders that can record digital broadcasts are becoming widely available.

In digital broadcast recording, a received digital broadcast is recorded onto an HDD (Hard Disk Drive) built in a recorder, and the digital broadcast program is copied from the HDD to another recording medium (e.g. an optical disc, a semiconductor memory, or another HDD) if the digital broadcast program can be copied (Copy Free), and moved from the HDD to the other recording medium if only one-generation recording of the digital broadcast program is permitted (Copy One Generation, meaning that copying of copies (copying for two or more generations) is not permitted).

Since the recorder according to Japanese Patent Application Laid-open 2002-319227 allows copying as long as such copying is made within a specified period of time even if the above-mentioned digital broadcast program is Copy One Generation, it is possible to compensate for cases where recording is interrupted.

However, as in the related art, the recorder according to Japanese Patent Application Laid-open 2002-319227 does not permit copying once the specified period of time elapses. For example, in the case of a recorder which does not allow recording of a program onto the HDD and copying of the program from the HDD to an optical disc simultaneously, when there are many programs to record and thus access to the HDD becomes congested, there is a possibility that the specified period of time elapses before copying of the program from the HDD to the optical disc is completed.

Recently, services are available in which encrypted download content such as a movie or TV drama is viewed (played back) after being stored onto a recording medium built in a recorder from a server or the like outside of home via the Internet. However, download content, in particular, content not permitted for export to other media (which refers to copying of content to a copyright-protected external device or to external equipment connected via a copyright-protected network, in particular, a content copy function based on usage conditions) can be viewed (played back) only on a receiver that has received the content, but cannot be viewed (played back) on another equipment.

Preferably accordingly, there are provided an apparatus and a method which improve ease of operation when recording a digital broadcast program while applying copy control.

Preferably specifically, for example, digital content, metadata describing information about the digital content, and license acquisition time limit information indicating a time limit until which license information on the digital content can be acquired, are received. The digital content, the metadata, and the license acquisition time limit information are recorded, and if the time limit indicated by the license acquisition time limit information has elapsed, the recorded digital content is not outputted.

Preferably specifically, for example, digital content, metadata describing information about the digital content, license acquisition time limit information indicating a time limit until which license information on the digital content can be acquired, and view time limit information indicating a time limit until which the digital content can be viewed, are received. The digital content, the metadata, the license acquisition time limit information, and the view time limit information are recorded. If the time limit indicated by the view time limit information has elapsed, the recorded digital content is not outputted, and if the time limit indicated by the view time limit information has not elapsed, the digital content is outputted.

Preferably according to the above-mentioned means, when recording a digital broadcast program, it is possible to improve ease of operation with respect to the recorded content while applying copy control.

### BRIEF DESCRIPTION OF THE DRAWINGS

These and other features, objects and advantages of the present invention will become more apparent from the following description when taken in conjunction with the accompanying drawings wherein:
Fig. 1 is a block diagram showing an exemplary configuration of a system;
Fig. 2 is a block diagram showing an exemplary configuration of a transmitter;
Fig. 3 shows an example of the structure of a content availability descriptor as one piece of content control information;
Fig. 4 shows an example of descriptions in individual fields of a content availability descriptor;
Fig. 5 shows an example of the structure of a digital copy control descriptor as one piece of copy control information;
Fig. 6 shows an example of information for controlling copy generations;
Fig. 7 shows an example of receiving processes in a receiver with respect to individual fields of a content availability descriptor transmitted from a transmitter;
Fig. 8 shows an operational example of program content protection by use of copy control information by a transmitter;
Fig. 9 shows an example of control when a receiver stores (records) program content by using copy control information;
Fig. 10 is a block diagram showing an example of the configuration of a receiver;
Fig. 11 shows an example of a transport packet to which a time stamp is attached;
Fig. 12 shows an example of program content as recorded on a recording medium;
Fig. 13 is a flowchart showing an example of the procedure of creating Copy Information and Copy Count of management information when recording Copy One Generation program content;
Fig. 14 is a flowchart showing an example of the procedure of copying program content;
Fig. 15 is a flowchart showing an example of the procedure of moving program content;
Fig. 16 is a diagram showing an example of a recording medium allowing management of multiple copies;
Fig. 17 is a flowchart showing an example of the procedure of creating Copy Information and Copy Count of management information when recording Copy One Generation program content;
Fig. 18 is a diagram showing an example of restriction on the number of copies;
Fig. 19 is a diagram showing an example of representative output destinations for content stored as "Copy with Count Restriction" and the corresponding copy control;
Fig. 20 is a diagram showing an example of copy control information for content data in DTCP; and
Fig. 21 is a diagram showing an example of copy control information for content data in DTCP.

### DETAILED DESCRIPTION OF THE EMBODIMENT

Hereinbelow, an example of preferred mode (embodiment) for carrying out the present invention will be described. It should be noted, however, that the present invention is not limited to this embodiment. This embodiment mainly relates to handling of information permitted to be copied for one generation.

### <System>

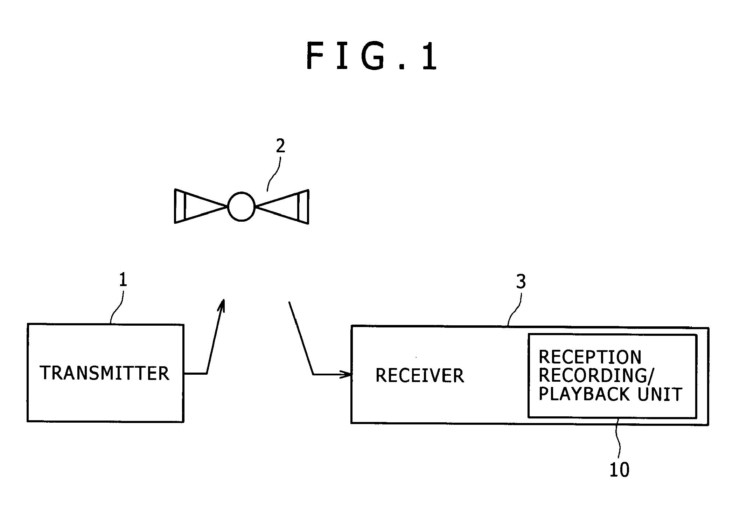

Fig. 1 is a block diagram showing an exemplary configuration of a system according to this embodiment. Fig. 1 illustrates a case in which information is transmitted and received by broadcasting for recording and playback.

Reference numeral 1 denotes a transmitter installed in an information providing station such as a broadcast station. Reference numeral 2 denotes a relay apparatus installed in a relay station, a broadcasting satellite, or the like. Reference numeral 3 denotes a receiver installed inside a user's home or the like. Reference numeral 10 denotes a reception recording/playback unit built in the receiver 3. The reception recording/playback unit 10 can record and play back broadcast information.

The transmitter 1 transmits a modulated signal wave via the relay apparatus 2. In addition to the transmission by a satellite as shown in the drawing, for example, transmission by a cable, transmission by a telephone line, transmission by terrestrial broadcasting, transmission using an IP (Internet Protocol) via a network such as the Internet, and the like can be also used. As will be described later, the signal wave received by the receiver 3 is demodulated into an information signal, and then recorded after being converted into a signal suitable for recording as necessary. The user can view video/audio indicated by the information signal by using a display if the receiver 3 has a built-in display, or by connecting the receiver 3 to a display (not shown) if the receiver 3 has no built-in display.

### <Transmitter>

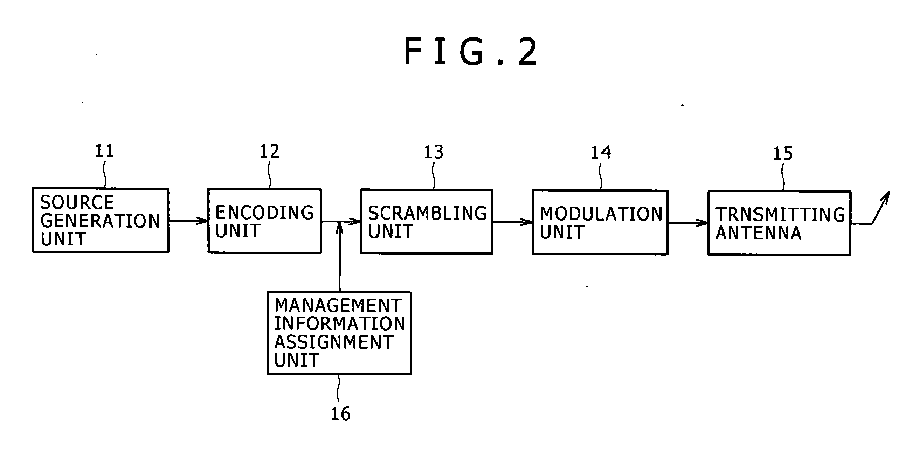

Fig. 2 is a block diagram showing an exemplary configuration of the transmitter 1 in the system shown in Fig. 1.

Reference numeral 11 denotes a source generation unit, reference numeral 12 denotes an encoding unit that performs compression in a scheme such as MPEG or H.264, reference numeral 13 denotes a scrambling unit, reference numeral 14 denotes a modulation unit, reference numeral 15 denotes a transmitting antenna, and reference numeral 16 denotes a management information assignment unit. Information such as video/audio generated by the source generation unit 11 formed by a camera, a recorder/player, or the like is compressed in data size in the encoding unit 12 so that the information can be transmitted with less occupied bandwidth. The compressed information is encrypted for transmission in the scrambling unit 13 as required so as to allow the information to be viewed by specific viewers. After being modulated by the modulation unit 14 into a signal suitable for transmission in accordance with OFDM, TC8PSK, QPSK, or the like, the signal is transmitted from the transmitting antenna 15 to the relay apparatus 2 as a radio wave. At this time, the management information assignment unit 16 adds copy control information which is information for controlling copying, and information such as the current time.

It should be noted that multiple pieces of information are often multiplexed into a single radio wave by a method such as time division or spectrum spread. Although not shown in Fig. 2 for the sake of simplicity, in such a case, there are multiple lines between the source generation unit 11 and the encoding unit 12, and a multiplexing unit for multiplexing multiple pieces of information is placed between the encoding unit 12 and the scrambling unit 13.

### <Copy Control Information>

Copy control information is information for controlling restrictions regarding whether or not to permit copying and the number of copies. The copy control information is added by, for example, the management information assignment unit 16. The copy control information includes a content availability descriptor, a digital copy control descriptor, and the like.

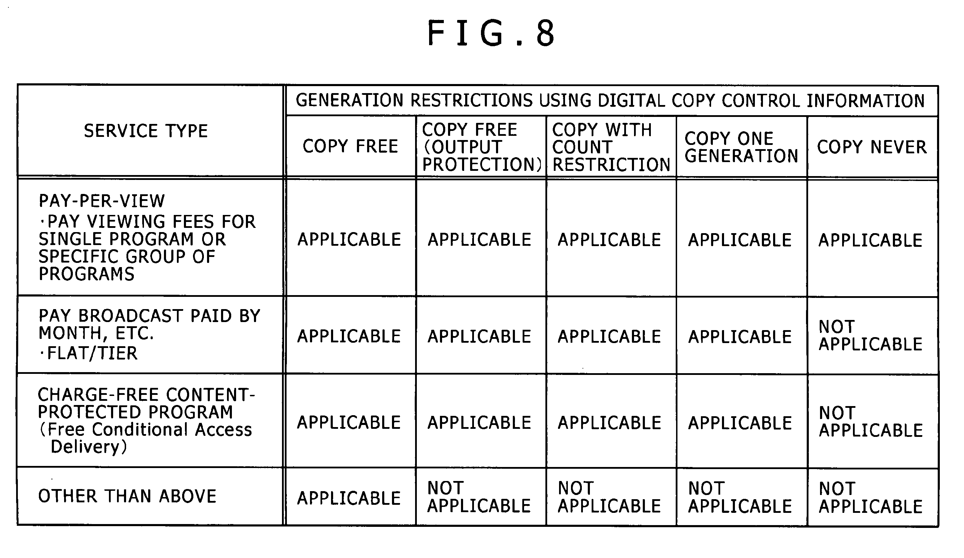

Fig. 8 shows an operational example related to protection of program content by use of copy control information.

"Applicable" indicates that, for content corresponding to each individual service type, the corresponding generation restriction can be selected at the transmitting side as a generation restriction using digital copy control information. For example, in the case of "Pay-per-view", any digital copy control information may be used. In the case of "Pay Broadcast paid by month, etc.", on the other hand, "Copy Never" cannot be selected at the transmitting side.

As for "Flat/tier", flat subscription refers to subscribing to multiple channels at once in paid broadcasts or the like, and tier subscription refers to subscribing on a channel-by-channel basis.

"Other than above" includes, for example, "programs which are not pay broadcasts and have no content protection".

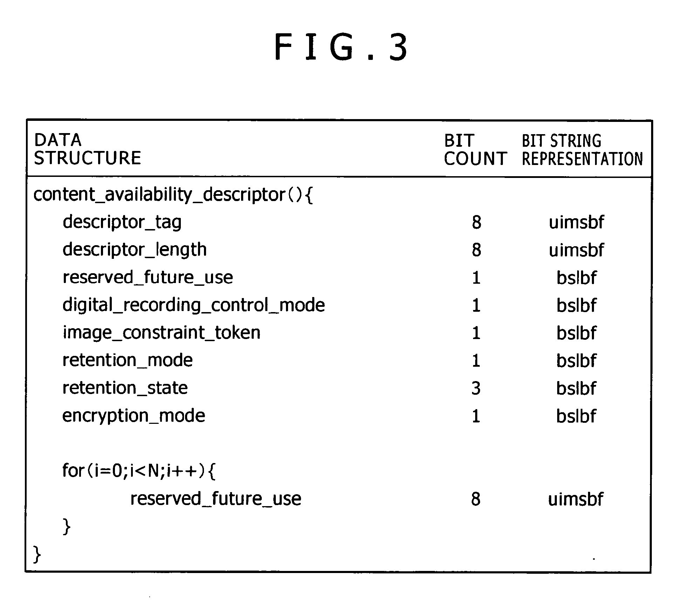

Fig. 3 shows an example of the structure of the content availability descriptor as one piece of content control information. The content availability descriptor is, for example, information that is generated and added by the management information assignment unit 16, and transmitted while being stored in PSI (Program Specific Information) (e.g. PMT (Program Map Table) and the like) or SI (Service Information) (e.g. EIT (Event Information Table), SDT (Service Description Table), and the like) of MPEG-TS.

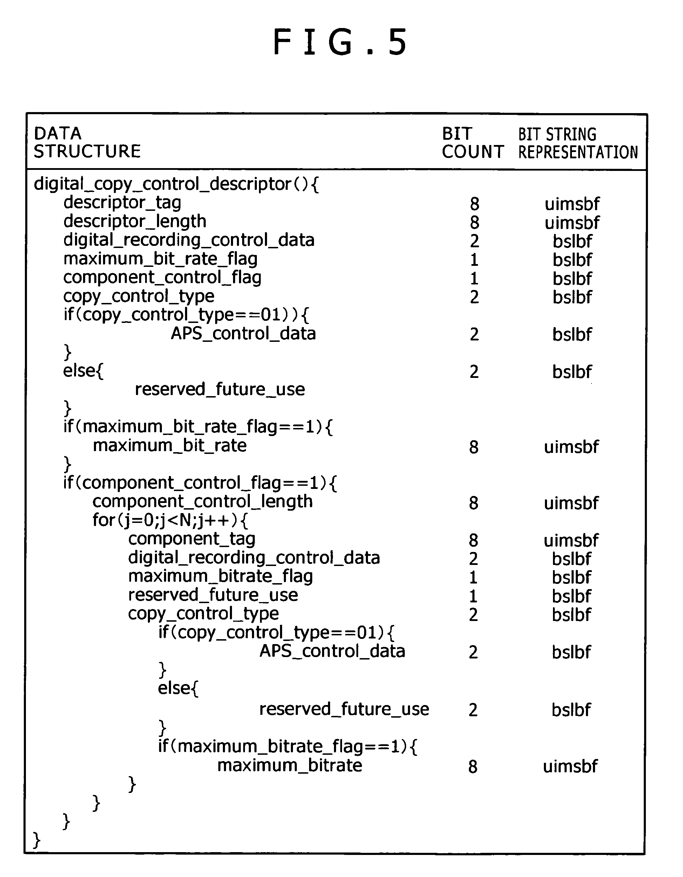

The content availability descriptor is placed (transmitted) in order to describe control information related to storage (recording) or output of the corresponding program. The content availability descriptor has the following meanings. When a 1-bit field digital_recording_control_mode (digital copy mode bit) is "1", this indicates that the program can be recorded as "Copy with Count Restriction" even if digital_recording_control_data of the digital copy control descriptor described later with reference to Fig. 5 is "Copy One Generation". When a 1-bit field digital_recording_control_mode is "0", this indicates that the program cannot be recorded as "Copy with Count Restriction".

It should be noted that the content availability descriptor is always placed (transmitted) in the case when the program is subject to output protection. The output protection means that protection is applied to high speed digital interface output of "Copy Freely" content by using an output protection bit (encryption_mode) of the content availability descriptor. In other words, although encryption is applied when outputting via a digital interface or copying to a recording medium, no restrictions are imposed on the number of times or generation of copying. Retransmission to the Internet is practically impossible. This is also referred to as "Copy Free with Output Protection" or EPN (encryption plus non-assertion).

Moreover, the content availability descriptor is always placed (transmitted) in the case when the digital copy control information of the program is "Copy One Generation", and the program is not subject to "Copy with Count Restriction".

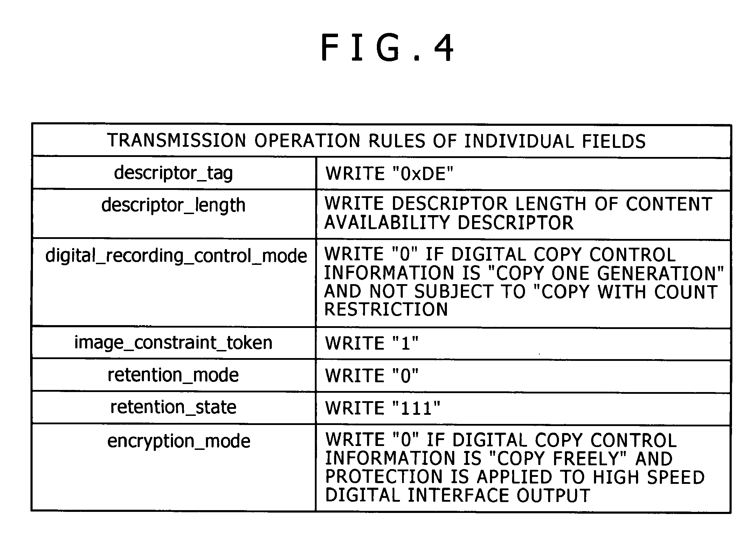

Fig. 4 shows an example of descriptions in individual fields of the content availability descriptor.

"0xDE" indicating the content availability descriptor is written in "descriptor_tag". The descriptor length of the content availability descriptor is written in "descriptor_length". "0" is written in "digital_recording_control_mode", if the digital copy control information is "Copy One Generation", and the corresponding program is not subject to "Copy with Count Restriction". "1" is written in "digital_recording_control_mode", if the digital copy control information is "Copy One Generation", and the corresponding program is subject to "Copy with Count Restriction".

"0" is written in "encryption_mode", if the digital copy control information is "Copy Freely", and protection is applied to the high speed digital interface output.

ftretention_mode" means a temporary storage control bit, in which "0" is written to indicate that temporary storage is possible even if "digital_recording_control_data" (digital copy control information) of the digital copy control descriptor is "Copy Never". "retention_state" means a permissible temporary storage time, in which "111" is written to indicate that storage for 1 hour and 30 minutes is possible. It should be noted that "image_constraint_token", "retention_state", and "encryption_mode" are set to "1" by default.

The total number of copies that can be made of "Copy with Count Restriction" content is restricted to 10 or less, including both the copy source and the copy destination. In the presence of a recording function to a removable recording medium or a Move function via high speed digital interface output, these are also subject to such a restriction. Specifically, for example, content at the copy source and content at the copy destination are to be subject to count restriction or copy prohibition (No More Copies) except for analog video/audio output and digital audio output. The content at the copy source or the copy destination may be moved within the above-mentioned restriction.

It should be noted that information used solely for the purpose of content management, such as a thumbnail, is not included in copying.

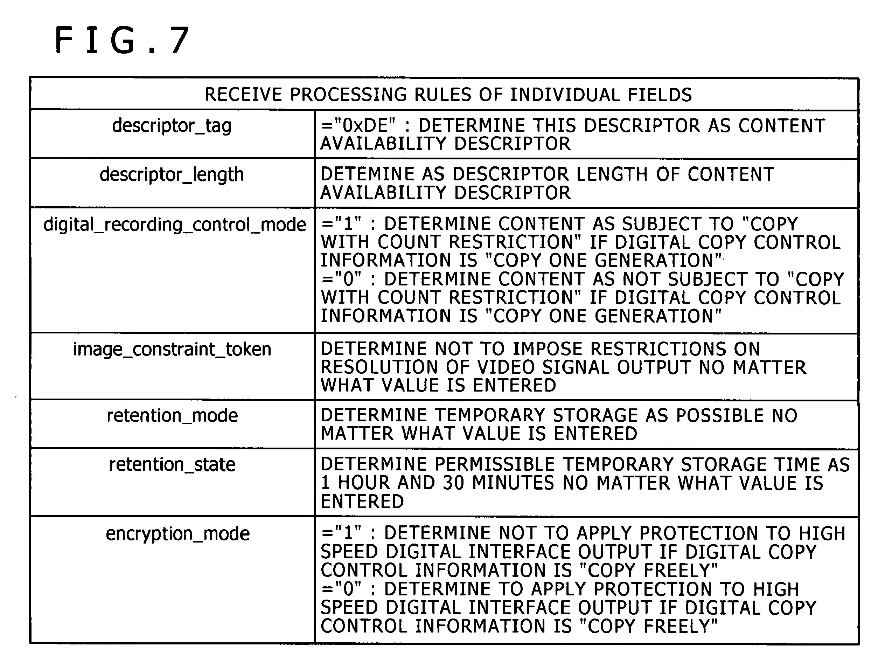

A description about the respective fields will be given later also with reference to Fig. 7 as processing at the receiver side.

Fig. 5 shows an example of the structure of the digital copy control descriptor as one piece of copy control information. For example, the digital copy control descriptor is information that is generated and added by the management information assignment unit 16, and transmitted while being stored in PSI (e.g. PMT and the like) or SI (e.g. EIT, SDT, and the like) of MPEG-TS.

The digital copy control descriptor represents information for controlling copy generations, by a 2-bit field
"digital_recording_control_data" (digital copy control information).

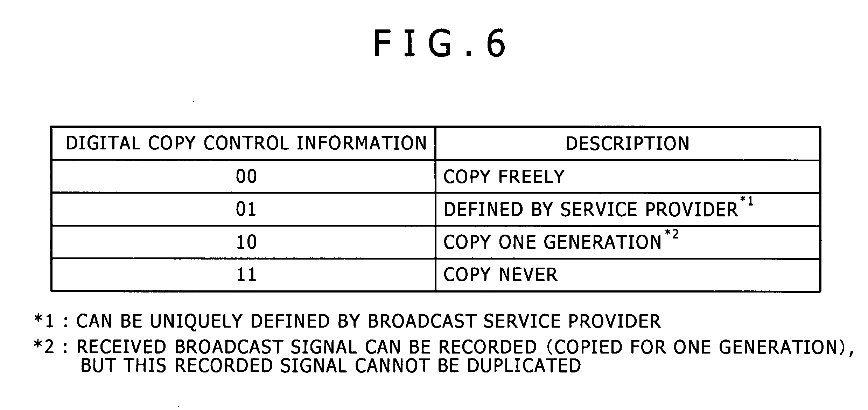

Fig. 6 shows an example of digital copy control information. When the digital copy control information is "00", "01", "10", and "11", the digital copy control information indicates Copy Freely, Defined by Broadcast Service Provider, Copy One Generation, and Copy Never, respectively. It should be noted that Copy One Generation means that a received broadcast signal can be recorded (first-generation copy), but cannot be duplicated (copied) once recorded.

The content availability descriptor shown in Figs. 3 and 4 is also referred to as count restriction information, and the digital copy control information shown in Figs. 5 and 6 is also referred to as copy generation restriction information.

### <Receiver>

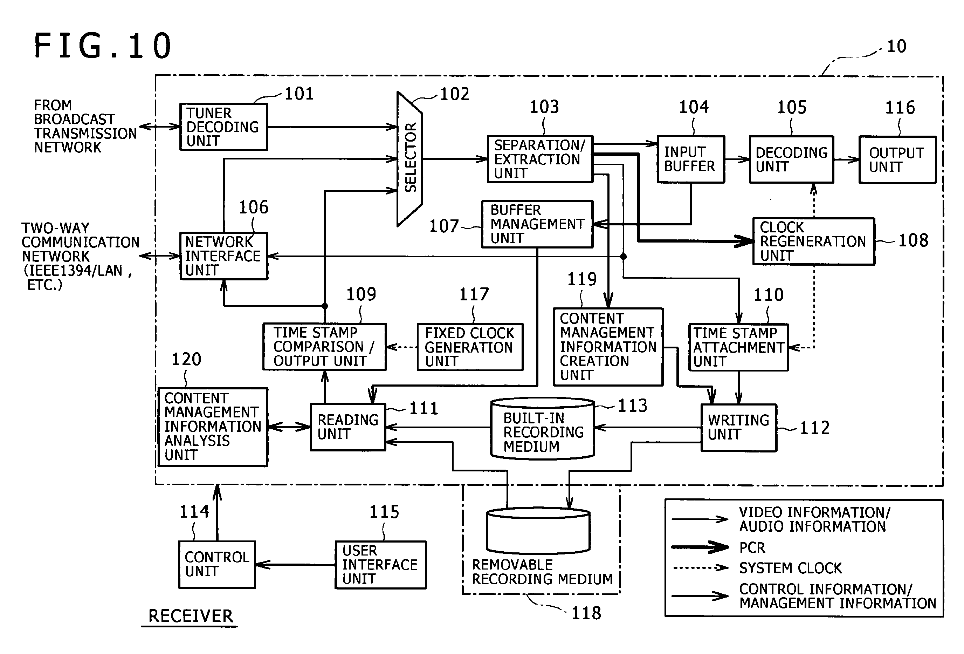

Fig. 10 is a block diagram showing an exemplary configuration of the receiver 3 in the system shown in Fig. 1. In Fig. 10, it is assumed that no contact occurs at locations where lines indicating flows of information, PCR, and the like intersect. However, portions marked with a black circle indicate that contact and branching occur at the portions.

The receiver 3 is a receiver that receives digital broadcasts or IP (Internet Protocol) broadcasts transmitted via a network, and performs recording and playback. The following description is directed to the case of handling a signal that has been encoded in the MPEG (Moving Picture Experts Group) scheme as an image compression technique and multiplexed in the MPEG2-TS scheme.

The receiver 3 includes the reception recording/playback unit 10, a control unit 114 (e.g. a CPU (Central Processing Unit)), and a user interface unit 115 (e.g. an input device such as a keyboard, a mouse, and a remote control).

While in this configuration example individual components are illustrated as hardware elements, some of these may be implemented by software. Moreover, this configuration example may be applied to transmission and reception of video content, audio content, and the like to specific users by VOD (Video On Demand), download, or the like via a network. These are generically referred to as distribution.

The control unit 114 is connected to the individual units (including the reception recording/playback unit 10) of the receiver by a bus unit, and controls the overall operation of the receiver. The control unit 114 also receives various command signals from the user via the remote control or the like of the user interface unit 115, and controls individual units connected via the bus unit on the basis of the command signals, thereby executing various processes.

The reception recording/playback unit 10 includes a tuner decoding unit 101, a selector 102, a separation/extraction unit 103 (e.g. a de-multiplexer), an input buffer 104, a decoding unit 105 (e.g. an MPEG decoder), a network interface unit 106, a buffer management unit 107, a clock regeneration unit 108, a time stamp comparison/output unit 109, a time stamp attachment unit 110, a reading unit 111, a writing unit 112, a built-in recording medium 113, an output unit 116, a fixed clock generation unit 117 (e.g. a crystal oscillator), a content management information creation unit 119, and a content management information analysis unit 120.

The built-in recording medium 113 (also referred to as first recording medium) and a removable recording medium 118 (also referred to as second recording medium) are randomly accessible media such as a hard disk drive (HDD), a semiconductor memory, a magnetic disk, an optical disc, and a magneto-optical disc.

The output unit 116 is a display unit using a CRT (Cathode Ray Tube), an LCD (Liquid Crystal Display), a PDP (Plasma DISPLAY Panel), or the like, an audio output unit using a speaker or the like, or a composite video output terminal, an S video output terminal (S terminal), a D video output terminal (D terminal) (these are analog video output terminals), an HDMI (High Definition Multimedia Interface) output terminal (digital video output terminal), an optical audio output terminal (digital audio output terminal), or the like for outputting analog or digital video/audio data to another display device or the like. The output unit 116 plays back decoded video/audio on the display unit/audio output unit which is an output device. Alternatively, the output unit 116 outputs video/audio content data or the like to another display device/audio playback device via an output terminal (e.g. HDMI). Since the video/audio content data is outputted from this output terminal in a format based on the content protection scheme of the corresponding output standard, the content can be protected.

The tuner decoding unit 101 receives a digital broadcast signal transmitted from the transmitter 1 via a broadcast transmission network such as wireless (satellite or terrestrial) or cable network. The tuner decoding unit 101 performs tuning to and detection of a physical or virtual channel frequency designated via a user operation unit such as the remote control of the user interface unit 115 and the control unit 114. The tuner decoding unit 101 also outputs MPEG2-TS (transport stream) on which digital demodulation and error correction have been performed, to the selector 102.

The selector 102 performs a 3-input 1-output selection process in accordance with control by the control unit 114, and outputs the resulting output to the separation/extraction unit 103.

The separation/extraction unit 103 separates/extracts, from an inputted MPEG2-TS, each transport packet of the channel (program) designated via the user operation unit such as the remote control of the user interface unit 115 and the control unit 114, and outputs the separated/extracted transport packet to the time stamp attachment unit 110 and the network interface unit 106. The separation/extraction unit 103 also separates/extracts, from each transport packet of the channel (program) designated via the user operation unit such as the remote control of the user interface unit 115 and the control unit 114, a PES (Packetized Elementary Stream) or ES (Elementary Stream) of video and audio, and outputs the PES or the ES to the input buffer 104.

The ES means each of compressed/encoded image and audio data. The PES is obtained by dividing and packetizing an image ES or an audio ES into a suitable size. The separation/extraction unit 103 also extracts a PCR (Program Clock Reference) from each transport packet of the channel (program) designated via the user operation unit such as the remote control of the user interface unit 115 and the control unit 114, and outputs the PCR to the clock regeneration unit 108.

The separation/extraction unit 103 detects, from each transport packet of the channel (program) designated via the user operation unit such as the remote control of the user interface unit 115 and the control unit 114, the title of the channel (program) to be recorded onto the built-in recording medium 113 or the removable recording medium 118 and the date and time of start/end of the program, copy generation control information, and information indicating whether or not to permit multiple copies. The separation/extraction unit 103 further creates a data encryption key, and outputs the detected information and the created encryption key to the content management information creation unit 119. The title and the date and time of start/end of the program, the copy generation control information, and the information indicating whether or not to permit multiple copies are transmitted from the transmitter 1 while being stored in PSI or SI information of MPEG-TS, for example.

The input buffer 104 temporarily stores the PES or ES of video/audio from the separation/extraction unit 103. The decoding unit 105 compares a DTS (Decoding Time Stamp)/PTS (Presentation Time Stamp) corresponding to the PES or ES stored in the input buffer 104 with an STC (System Time Clock) count value from the clock regeneration unit 108 to take the decoding/presentation timing, thereby extracting and decoding the PES or ES of video/audio stored in the input buffer 104. The decoded video/audio is outputted to the output unit 116.

The buffer management unit 107 monitors the amount of transport packets in the input buffer 104 which have not yet been processed by the decoding unit 105, and controls the start and stop of reading by the reading unit 111 in accordance with the amount.

The clock regeneration unit 108 uses the PCR to regenerate the receiver's system clock whose frequency matches the frequency of the system clock of an encoding/multiplexing unit at the transmitter 1 side (not shown), for example. The clock regeneration unit 108 outputs the regenerated system clock to an STC counter in the clock regeneration unit 108, the time stamp attachment unit 110, and the like. The clock regeneration unit 108 also outputs the STC count value of the STC counter which operates in accordance with the regenerated system clock, to the decoding unit 105.

The time stamp attachment unit 110 generates a time stamp by a counter that operates on the basis of, for example, the system clock regenerated by the clock regeneration unit 108 or a crystal oscillator (not shown), attaches a time stamp to each transport packet separated/extracted by the separation/extraction unit 103, and outputs the resulting transport packet to the writing unit 112.

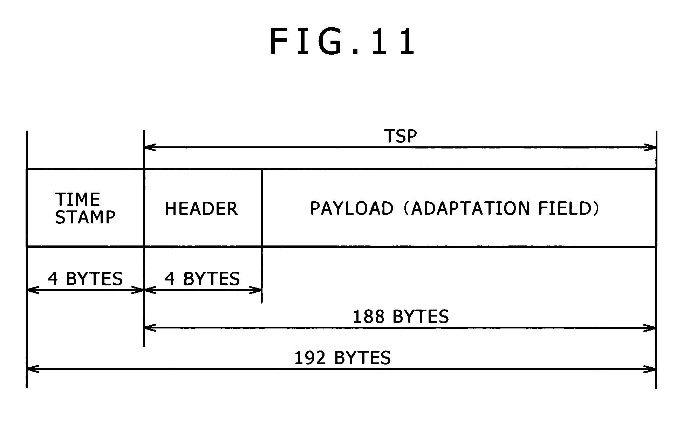

Fig. 11 shows an example of the structure of a transport packet to which a time stamp is attached. A transport packet (TSP) of 188 bytes in length in MPEG has a 4-byte time stamp (for example, the time at which the receiver receives the transport packet) attached to the beginning, resulting in a packet of 192 bytes in length. The time stamp holds time stamp information of the time of arrival of the transport packet. The TS in MPEG is made up of a 4-byte header at the beginning, followed by a 184-byte payload (or an adaptation field).

The content management information creation unit (content information creation unit) 119 creates management information on the basis of the title, the date and time of start/end of the program, the copy generation control information, the copy count control information (indicating whether or not to permit multiple copies), and the key information received from the separation/extraction unit 103, and outputs the management information to the writing unit 112. As for the copy generation control information and the copy count control information, the content availability descriptor and the digital copy control descriptor described above with reference to Figs. 3 to 6 which are received from the transmitter 1 may be used as the management information as they are, or the copy generation control information and the copy count control information may be created as new information on the basis of these descriptors.

The writing unit 112 records the management information created by the content management information creation unit 119, and encrypted data obtained by encrypting the transport packet to which the time stamp is attached by the time stamp attachment unit 110 on the basis of the key information within the above-mentioned management information, onto the built-in recording medium 113 or the removable recording medium 118. As a result, a single stream including encrypted data obtained by encrypting multiple time-stamped transport packets containing the video/audio data of a given channel (in other words, a given program content or downloaded content), is stored onto the built-in recording medium 113 or the removable recording medium 118 as a single data file or two or more fragmented data files obtained by dividing the data file.

It should be noted that a time stamp can be also regarded as time information related to the temporal position of a transport packet to which the stamp is attached. For example, a time stamp can be also regarded as the time at which a transport packet from the separation/extraction unit 103 is inputted to the time stamp attachment unit 110, or the time difference from a given reference transport packet (for example, the immediately preceding transport packet or the leading transport packet). As described above, this time stamp is different from a time stamp (such as a PCR, a DTS, or a PTS) included in the transport packet in advance.

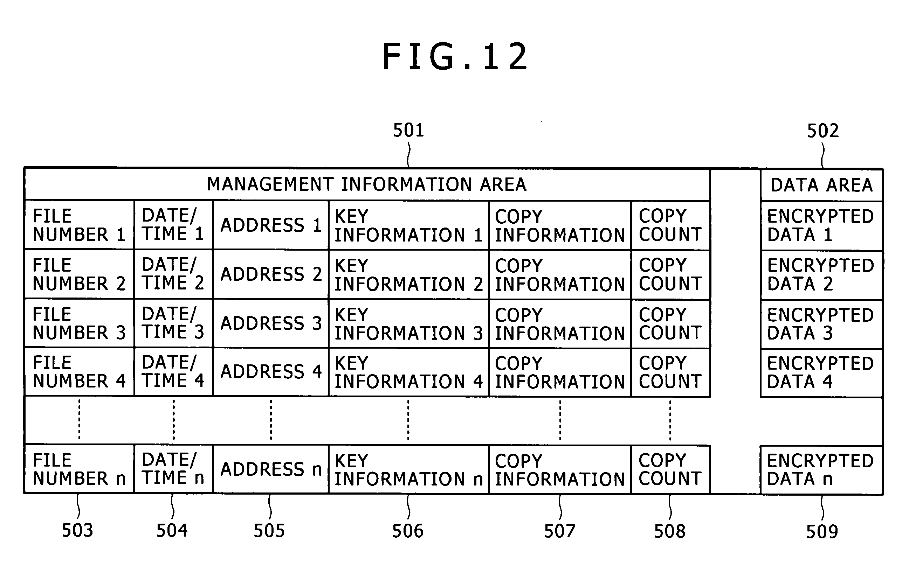

Fig. 12 shows an example of program content as recorded on the built-in recording medium 113 or the removable recording medium 118.

For each individual program content, management information indicating the details of the program content, and data (such as video/audio) as the substance of the program content are recorded in a management information area 501 and a data area 502, respectively. For example, File Number 503 indicating the title of program content, Date/Time 504 indicating the start/end date and time of the program, Starting Address and Record Size 505 of a data area, Copy Information 507, Copy Count 508, Key Information 506, and the like are recorded as the management information. Program content is written into the data area 502 from an address corresponding to the Starting Address 505 recorded in the management information area 501. Every time new program content is recorded, management information and program content are recorded sequentially, in the manner of file number 1, file number 2, ..., and file number n.

The Copy Information 507 is copy generation control information included in the management information created by the content management information creation unit 119. For example, a 2-bit signal can be used to designate:
00 = Copy Free
10 = Copy One Generation
11 = Copy Never
In this case, for program content recorded as "Copy One Generation", the receiver 3 defines as 01 = no more copying can be made of content already copied once as "Copy One Generation" (No More Copies). The manner of designation may be the same as in the case of the digital copy control information shown in Fig. 6, or may be unique to the receiver 3.

The Copy Count 508 is copy count control information contained in the management information created by the content management information creation unit 119. The Copy Count 508 is information created on the basis of the copy generation control information and the information indicating whether or not to permit multiple copies, which are received by the content management information creation unit 119 from the separation/extraction unit 103. If the copy generation control information is Copy One Generation and the information indicating whether or not to permit multiple copies indicates "Permit", the corresponding program content is recorded as "No More Copies", information indicating the permitted copy count is stored so as to enable copying to the same or different recording medium in the same or different format. For example, "9" meaning that 9 copies are permitted is entered. This numerical value may be in compliance with an applicable standard or the like. On the other hand, if the copy generation control information is Copy One Generation and the information indicating whether or not to permit multiple copies indicates "Not Permit", the program content is recorded as "No More Copies", and "0" (meaning that copying is not permitted) is entered as information indicating the permitted copy count to disable copying.

It should be noted that the data that is the substance of program content obtained by recording "Copy One Generation" content as "No More Copies", that is, the copy generation control information and the information indicating whether or not to permit multiple copies, which are transmitted from the transmitter 1 while being stored in the PSI or SI of MPEG-TS, are not changed.

Moreover, for example, encryption is applied to the Copy Information 507, the Copy Count 508, and the Key Information 506 so as to prevent tampering.

Returning to the description of Fig. 10, the content management information analysis unit 120 reads management information stored on the built-in recording medium 113 or the removable recording medium 118 via the reading unit 111, and analyzes the management information. The content management information analysis unit 120 passes the title of each program content, the start/end date and time of the program, copy information, copy count, and the like to the control unit 114 so that program content can be selected via the user operation unit such as the remote control of the user interface unit 115 and the control unit 114 when performing playback, copying, or moving of program content stored on the built-in recording medium 113 or the removable recording medium 118. The content management information analysis unit 120 also passes key information for decrypting encrypted data to the reading unit 111.

The reading unit 111, which is controlled via the buffer management unit 107 or the control unit 114, reads management information from the built-in recording medium 113 or the removable recording medium 118, outputs the management information to the content management information analysis unit 120, successively reads encrypted data from the built-in recording medium 113 or the removable recording medium 118, and outputs each time-stamped transport packet obtained by applying decryption to the encrypted data on the basis of the key information passed from the content management information analysis unit 120, to the time stamp comparison/output unit 109.

The time stamp comparison/output unit 109 compares the count value of a counter that operates on the basis of the fixed clock generation unit 117 such as a crystal oscillator, with the time stamp of the time-stamped transport packet read by the reading unit 111. If the count value and the time stamp match, the time stamp comparison/output unit 109 deletes (removes) the time stamp from the transport packet, and outputs the resulting transport packet to the selector 102 and the network interface unit 106. It should be noted that in the case where, as described above, the buffer management unit 107 monitors the remaining amount of the input buffer 104 and controls the reading unit 111 in accordance with the amount, the time stamp comparison/output unit 109 may delete the time stamp from the transport packet and output the resulting transport packet to the selector 102 and the network interface unit 106, without performing a comparison between the count value and the time stamp. This output method is preferable particularly when performing playback other than normal playback (1-times speed playback).

The network interface unit 106 is connected to another apparatus (such as a recorder, a display, or a personal computer inside of home, or a server outside of home) which is the output destination/input source, via a line (such as an IEEE 1394 cable, a LAN cable, or a wireless line). The network interface unit 106 receives each transport packet of video/audio or the like from which a time stamp has been deleted by the time stamp comparison/output unit 109 or each transport packet separated/extracted by the separation/extraction unit 103, converts such a transport packet into a format conforming to each transmission standard, and outputs the video/audio data stored on the built-in recording medium 113 or the removable recording medium 118 or the video/audio data of the digital broadcast signal received by the tuner decoding unit 101, to another apparatus that is the output destination via the line. The network interface unit 106 also receives data such as video/audio inputted from another apparatus that is the input source via the line in a format conforming to each transmission standard, converts the data into a transport packet, and outputs the transport packet to the selector 102. It should be noted that there may be multiple network interface units 106.

### <Receiving and Recording Process Related to Copy Control Information>

A description will be given below of a detailed example of processing in the receiver 3 related to the copy control information described with reference to Figs. 3 to 6 transmitted from the transmitter 1.

Fig. 7 shows an example of processing with respect to each individual field of the content availability descriptor in the receiver 3.

When "descriptor_tag" is "0xDE", it is determined that the corresponding descriptor is a content availability descriptor. From "descriptor_length", it is determined that this field indicates the descriptor length of the content availability descriptor. If "digital_recording_control_mode" is "1", it is determined that the corresponding content is subject to "Copy with Count Restriction" in the case when the digital copy control information is "Copy One Generation". If "digital_recording_control_mode" is "0", it is determined that the corresponding content is not subject to "Copy with Count Restriction" in the case when the digital copy control information is "Copy One Generation". For "image_constraint_token", it is determined not to impose any restrictions on the resolution of video signal output no matter what value is entered in this field. For "retention_mode", it is determined that temporary storage is possible no matter what value is entered in this field. For "retention_state", it is determined that the permissible temporary storage time is 1 hour and 30 minutes no matter what value is entered in this field. If "encryption_mode" is "1", it is determined that no protection is applied to high speed digital interface output in the case when the digital copy control information is "Copy Freely". If "encryption_mode" is "0", it is determined that protection is applied to high speed digital interface output in the case when the digital copy control information is "Copy Freely".

It should be noted that if the content availability descriptor is not placed (transmitted) for some reason, the respective fields may be interpreted as having the following values:
digital_recording_control_mode = "1", image_constraint_token = "1",
retention_mode = "0", retention_state = "111", and encryption-mode = "1".

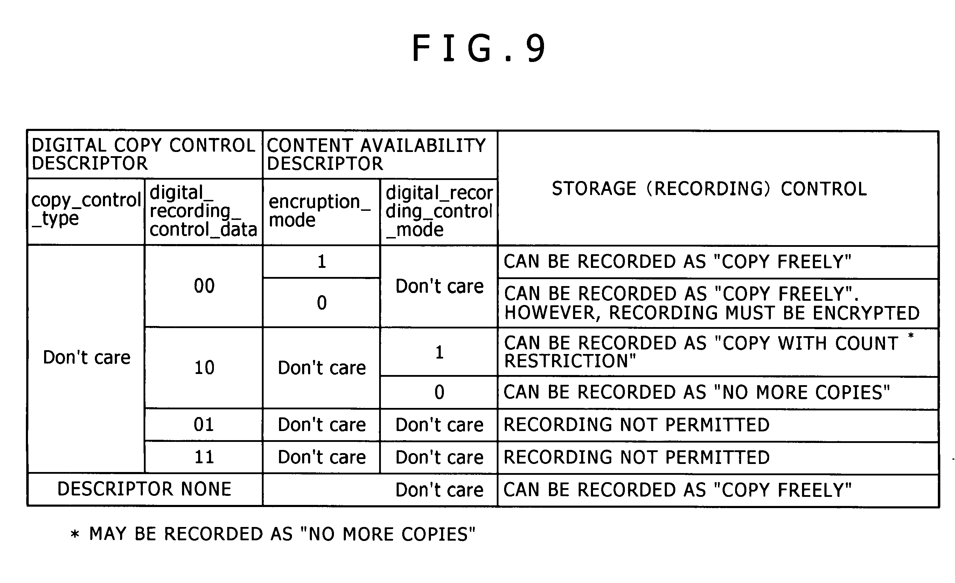

Fig. 9 shows an example of control by which the receiver 3 stores (records) program content by using copy control information.

As shown in Fig. 9, for example, when storing program content, if digital_recording_control_data of the digital copy control descriptor is "10" indicating "Copy One Generation", copy control information on the recording medium is stored as "No More Copies". However, if digital_recording_control_mode is "1", the copy control information is stored as "Copy with Count Restriction". It should be noted that even when storing as "No More Copies", the value of digital_recording_control_data of the digital copy control descriptor does not need to be changed.

When digital_recording_control_data of the digital copy control descriptor is "10" indicating "Copy One Generation", multiple copies cannot be generated. However, this excludes storage to an area rendered inaccessible by the user for the purpose of backup. It is assumed here that the above-mentioned restriction is imposed for every broadcast reception unit, and when there are multiple broadcast reception units, the above-mentioned restriction is imposed for each single broadcast reception unit.

With regard to "Copy with Count Restriction", N copies can be generated from program content stored as "Copy with Count Restriction". The value of N may be in compliance with an applicable standard, for example. When generating copies via high speed digital interface output, copying may be performed if the number of generated copies can be determined by using a Move function, for example. For example, this corresponds to a case in which it has been successfully recognized that the interface is IEEE 1394 and the output destination is a DTCP-compliant apparatus. It should be noted that the generated copies are set to a "No More Copies" state or other such equivalent state.

When playing back and outputting program content stored as "Copy with Count Restriction", in the case of a high speed digital interface, the program content is outputted after "No More Copies" processing specified by DTCP (Digital Transmission Content Protection). For analog video output and digital audio output, program content can be outputted as "Copy One Generation".

The total number of copies that can be made of "Copy with Count Restriction" content is restricted to 10 or less, including both the copy source and the copy destination. In the presence of a recording function to a removable recording medium or a Move function via high speed digital interface output, these are also subject to such a restriction. Specifically, for example, content at the copy source and content at the copy destination are to be subject to count restriction or copy prohibition (No More Copies) except for analog video/audio output and digital audio output. The content at the copy source or the copy destination may be moved within the above-mentioned restriction.

As for content recorded (stored) as "Copy with Count Restriction", when performing digital recording (copying) of such content to a recording medium and copying of the content via high speed digital interface output, up to 9 copies can be generated, in addition to the originally recorded (stored) content. However, this excludes recording (storage) into an area not accessible by the user for the purpose of backup, at the time or after recording. The original content after the specified number (9) of copies are generated can be moved in the same way as "No More Copies" content.

For content recorded (stored) as "Copy with Count Restriction", it is possible to move all or some of the number of its managed copies to a built-in or digitally-connected recording medium that supports digital_recording_control_mode. In this case, the total number of copies must remain unchanged before and after the Move.

The management of the number of copies when copying content marked "Copy with Count Restriction" onto the built-in recording medium and when copying the content via the high speed digital interface is equivalent to the case when there are 10 pieces of content that are movable. For analog video output and digital audio output, the content can be outputted as "Copy One Generation", and such output is not subject to the count restriction.

As for recording to the removable recording medium, if the same management of the number of copies as mentioned above is possible, content can be recorded as "Copy with Count Restriction".

For content marked "Copy with Count Restriction", when moving all or some of the number of its copies managed at the Move source, the total number of pieces of movable content must remain unchanged before and after the Move. Specifically, if the number of pieces of movable content before the Move is 10, and 4 pieces of content out of these are to be moved, the number of pieces of movable content at the Move source is set to 6.

It should be noted that copies in this case do not include information used solely for the purpose of content management, such as a thumbnail. Other than a thumbnail created from video information, for example, information using audio information or information using subtitle information may be used as such information used for the purpose of content management.

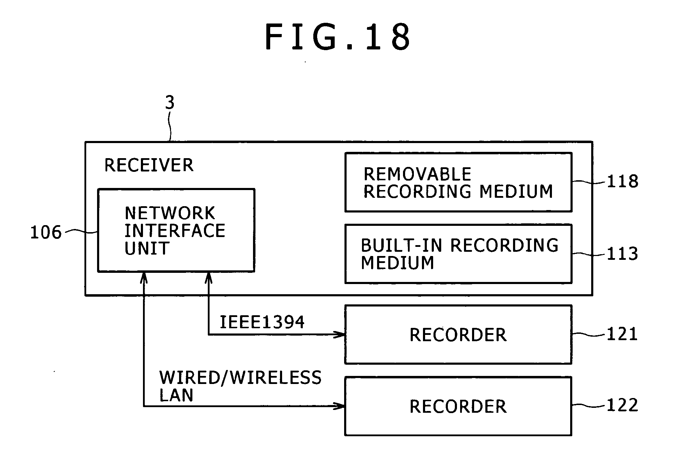

Fig. 18 is a diagram for understanding of the above-mentioned restriction on the number of copies, and shows the receiver 3, the network interface unit 106, the built-in recording medium 113, the removable recording medium 118, a recorder 121, and a recorder 122. The recorder 121 is connected to the network interface unit 106 via IEEE 1394, for example, and uses DTCP as a copyright protection scheme. The recorder 122 is connected to the network interface unit 106 via a wired LAN or a wireless LAN, for example, and uses DTCP-IP (Digital Transmission Content Protection over Internet Protocol) as a copyright protection scheme. In the case of the connecting configuration described above, for example, as for "Copy with Count Restriction" content received from a broadcast wave, the total number of copies of the content that are present on the built-in recording medium 113, the removable recording medium 118, the recorder 121, and the recorder 122 needs to be not more than 10.

In this case, for example, there are four pieces of copyable content on the built-in recording medium 113, two pieces of copyable content on the removable recording medium 118, one piece of content on the recorder 121, and one piece of content on the recorder 122. When recording content by receiving a broadcast wave, the content may be simultaneously recorded onto the built-in recording medium 113, the removable recording medium 118, the recorder 121, and the recorder 122 so that the above-mentioned number of copies is present, or the content may be initially recorded onto only the built-in recording medium 113 and then copied to the removable recording medium 118, the recorder 121, and the recorder 122.

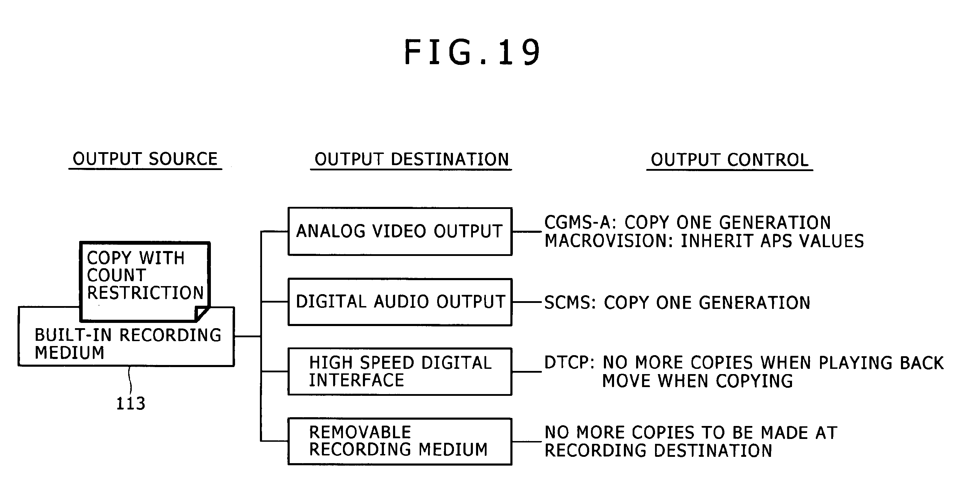

Fig. 19 is a diagram for understanding representative output destinations for the above-mentioned content stored as "Copy with Count Restriction" and the corresponding copy control. For example, the output source is, for example, the built-in recording medium 113 in the reception recording/playback unit 10, and the analog video output (such as the composite video output terminal, the S terminal, and the D terminal) in the output unit 116 uses CGMS-A (Copy Generation Management System - Analog) and Macrovision as copy control. The control of CGMS-A is Copy One Generation, and the control of Macrovision inherits the values of APS (Analog Protection System). The digital audio output (such as an optical audio output terminal) uses SCMS (Serial Copy Management System) as copy control, and the control of SCMS is Copy One Generation. The high speed digital interface (such as the IEEE 1394 terminal) in the network interface unit 106 uses DTCP (Digital Transmission Content Protection) as copy control, and the control of DTCP is No More Copies when playing back and "Move" when copying. For the removable recording medium 118, copy control is performed which prohibits any more copies at the recording destination.

By performing copy control appropriate to different output destinations in this way, when recording by receiving a broadcast wave, multiple pieces of the same program can be recorded to multiple recording media or recorders. This advantageously makes it possible to achieve content protection while ensuring user convenience.

In the above description, the above-mentioned recorders 121 and 122 are connected via IEEE 1394 and LAN, respectively. However, the connection method is not necessarily limited to one using IEEE 1394 or LAN, and these recorders may be connected by other connection methods.

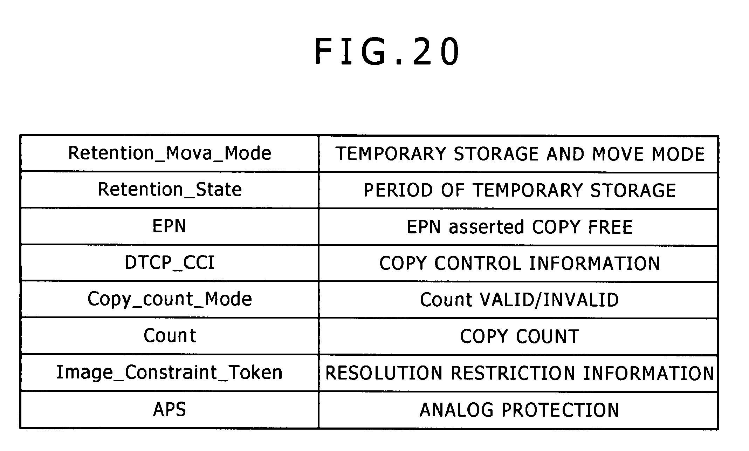

As described above, when moving content managed as "Copy with Count Restriction" to a digitally-connected recording medium while keeping the number of its copies managed, it is required to ensure that the total number of copies be unchanged before and after the Move. An example of method for achieving this will be described below. When a TS packet is transmitted by DTCP-IP, DTCP_descriptor including content copy control information is set in (added or attached to) PMT. Fig. 20 is a diagram showing an example of the DTCP_descriptor. The DTCP_descriptor includes retention_move_mode indicating whether temporary storage or Move mode of a digital stream is specified, retention_state indicating the period of temporary storage, DTCP_CCI (DTCP-Copy Control Information) indicating whether or not copying of a digital stream in the MPEG2-TS format is permitted, EPN which indicates, when DTCP_CCI indicates Copy Free, whether or not the Copy Free is EPN Asserted Copy Free, Count indicating the number of copies permitted, Copy_count_Mode indicating whether or not Count information is valid, Image_Constraint_Token indicating that resolution restriction is imposed in playing back and outputting a digital stream in the MPEG2-TS format, and APS (Analogue Protection System) indicating whether or not protection is applied to analog output in converting a digital stream in the MPEG2-TS format into analog for output. As described above, transmission of DTCP_descriptor is performed after setting (adding or attaching) the DTCP_descriptor in PMT for storage in a TS packet. In this regard, when transmitting content other than MPEG2-TS, for example, MPEG2-PS or the like, the copy control information for content data described above may be stored in a packet that is attached as a packet different from that of the transmission content defined in the DTCP-IP standard. Of course, when transmitting MPEG2-TS as well, copy control information for content data may be stored in a packet different from that of the transmission content.

By performing appropriate copy control using such Copy_count_Mode and Count information at the content transmitting side and receiving side in this way, when recording content managed as "Copy with Count Restriction" onto a digitally-connected recording medium via a wired/wireless LAN or the like, the content can be moved while keeping the number of its managed copies. This advantageously makes it possible to achieve content protection while ensuring user convenience.

That is, by using Copy_count_Mode and Count information obtained by extending the DTCP-IP standard, when recording content managed as "Copy with Count Restriction" onto a digitally-connected recording medium via a wired/wireless LAN or the like, the content can be moved while keeping the number of its managed copies.

When Copy_count_Mode and Count information obtained by extending the DTCP-IP standard are used to output received "Copy with Count Restriction" content via a wired/wireless LAN or the like directly without storing the content (live-broadcast output), it is possible to output the content as "Copy One Generation" to multiple pieces of LAN-connected equipment (however, not exceeding the count restriction applied to "Copy with Count Restriction" content). However, if the number of pieces of connected equipment is restricted by the DTCP-IP standard, then such a restriction should be followed.

Alternatively, it is possible to output such content as "Copy with Count Restriction" by limiting the (number of) pieces of destination equipment to be LAN-connected to one. Which one of these types of output to select may be determined in compliance with an applicable standard if specified by the standard.

By using Copy_count_Mode and Count information at the content transmitting side and receiving side in this way, when performing live-broadcast output of "Copy with Count Restriction" content to record the content to a digitally-connected recording medium via a wired/wireless LAN or the like, the content can be outputted as "Copy One Generation" to multiple pieces of LAN-connected equipment (however, not exceeding the count restriction applied to "Copy with Count Restriction" content) , or can be outputted as "Copy with Count Restriction" by limiting the (number of) pieces of destination equipment to be LAN-connected to one. This advantageously makes it possible to achieve content protection while ensuring user convenience.

Further, when Copy_count_Mode and Count information obtained by extending the DTCP-IP standard are used to perform live-broadcast output of "Copy with Count Restriction" content to LAN-connected equipment while recording the content as "Copy with Count Restriction" onto a recording medium built in the receiver, the content can be outputted as "Copy One Generation". When performing live-broadcast output of content marked "Copy with Count Restriction" to LAN-connected equipment without recording the content onto a recording medium built in the receiver, the content can be outputted as "Copy with Count Restriction".

When performing live-broadcast output to a LAN-connected device in the case where content marked "Copy with Count Restriction" is recorded as "Copy One Generation" on a recording medium built in the receiver, the content can be outputted as "Copy with Count Restriction". For example, this may comply with an applicable standard if specified by the standard.

By using Copy_count_Mode and Count information at the content transmitting side and receiving side in this way, in accordance with the status of recording on a recording medium built in the receiver, content marked "Copy with Count Restriction" can be outputted for live broadcast and recorded onto a digitally-connected recording medium via a wired/wireless LAN or the like. This advantageously makes it possible to achieve content protection while ensuring user convenience.

Further, when Copy_count_Mode and Count information obtained by extending the DTCP-IP standard are used to perform live-broadcast output of received "Copy with Count Restriction" content directly via a wired/wireless LAN or the like without storing the content, it is possible to set multiple (number) of pieces of destination equipment to be LAN-connected, and output the content while dividing the number of its copies among each individual piece of equipment. In this case, the sum (total number) of copies is restricted to 10.

By using Copy_count_Mode and Count information at the content transmitting side and receiving side in this way, when performing live-broadcast output of received "Copy with Count Restriction" content, and recording the content onto a digitally-connected recording medium via a wired/wireless LAN or the like, it is possible to set multiple (number) of pieces of destination equipment to be LAN-connected, and output the content while dividing the number of its copies among each individual piece of equipment. This advantageously makes it possible to achieve content protection while ensuring user convenience.

Also, by using Copy_count_Mode and Count information obtained by extending the DTCP-IP standard, content stored as "Copy with Count Restriction" on a recording medium built in the receiver can be outputted (moved) as "Copy with Count Restriction" by limiting the (number of) pieces of destination equipment to be LAN-connected to one.

By using Copy_count_Mode and Count information at the content transmitting side and receiving side in this way, content stored as "Copy with Count Restriction" can be outputted (moved) as "Copy with Count Restriction" by limiting the (number of) pieces of destination equipment to be LAN-connected to one. This advantageously makes it possible to achieve content protection while ensuring user convenience.

While Count indicating the number of copies permitted and Copy_count_Mode indicating whether or not the Count information is valid are used in the above description, there is no problem even if Copy_count_Mode is not used and only Count indicating the number of copies permitted is used.

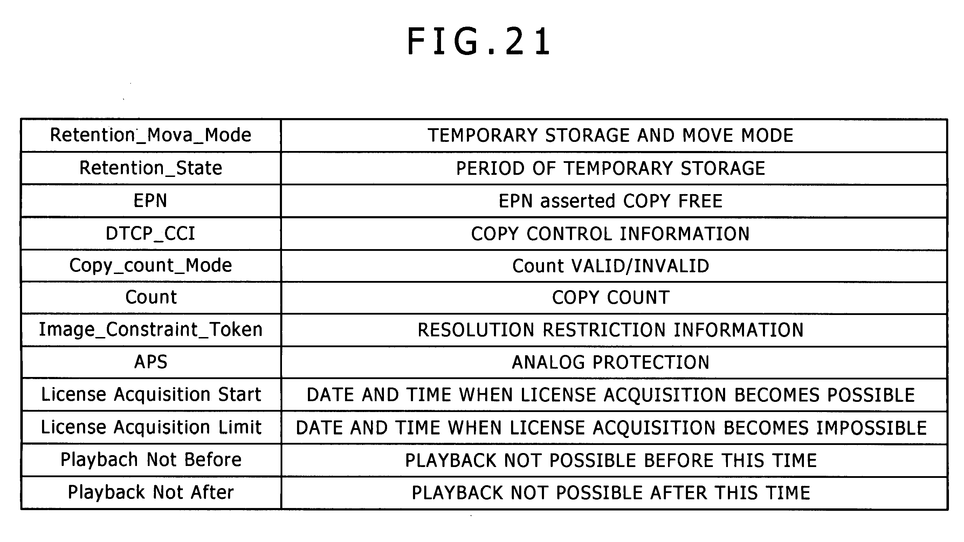

Fig. 21 is a diagram showing another example of DTCP_descriptor. In Fig. 21, since retention_move_mode, retention_state, DTCP_CCI (DTCP_Copy Control Information), EPN, Count, Copy_count_Mode, Image_Constraint_Token, and APS (Analogue Protection System) are the same as those described with reference to Fig. 20, description thereof is omitted, and description will be given of License Acquisition Start, License Acquisition Limit, Playback Not Before, and Playback Not After.

For example, these pieces of information are used when recording, onto a digitally-connected recording medium via a wired/wireless LAN or the like, encrypted download content which is inputted to the network interface unit 106 from a server outside of home via a line (such as an IEEE 1394 cable, a LAN cable, or a wireless LAN) and stored on the built-in recording medium 113, or metadata (data describing information about content), media files (the body of content), and the like which are stored onto the built-in recording medium 113 by receiving a digital broadcast signal transmitted from the transmitter 1 via a broadcast transmission network such as a satellite, terrestrial waves, or a cable.

There are various sale types for the above-mentioned download content, such as single-unit rental, advance single-unit rental, package rental, single-unit sell, advance single-unit sell, and package sell.

Single-unit rental is a type of sale in which signal-unit content is downloaded to a receiving terminal, and after a download playback license required for viewing the content is acquired from a server outside of home, the content can be played back within a viewable period.

Advance single-unit rental is a type of sale of a single-unit rental product in which content is sold before a viewable period, and only download distribution of metadata and media files is performed in advance. The date and time of release (first run) is set after the end of the content sale, and thereafter the content can be viewed by acquiring a download playback license required for viewing the content from a server outside of home.

Package rental is a type of sale in which multiple pieces of content are sold at once (as a package). The same viewable period is set for all the pieces of content within the package. Single-unit sell is a type of sale in which content is sold by download to a receiving terminal, and can be played back without any restrictions on view time limit. Single-unit sell comes in two types: a sale accompanying an export license for export (which refers to copying of content to a copyright-protected external device or copyright-protected external equipment connected via a network, in particular, a content copy function based on usage conditions) to media, and a sale not accompanying an export license. An export license is acquired from a server outside of home at the time of executing an export, for example. Advance single-unit sell is a type of sale of a single-unit sell product in which content is sold before a viewable period, and only download distribution of metadata and media files is performed in advance. The date and time of release (first run) is set after the end of the content sale, and thereafter the content can be viewed by acquiring a download playback license required for viewing the content from a server outside of home. Package sell is a type of sale in which multiple single-unit sell products are sold at once (as a package).

License Acquisition Start indicates the date and time when it becomes possible to acquire a license, which is, for example, the date and time when it becomes possible to acquire a download playback license in the case of advance single-unit rental or advance single-unit sell. License Acquisition Limit indicates the date and time when it becomes no longer possible to acquire a license, which is, for example, the date and time when it becomes impossible to acquire a download playback license or an export license. Playback Not Before indicates that playback is not possible before this date and time (time period). For example, Playback Not Before is set in the case of rental-type content which cannot be viewed immediately after acquisition of a download playback license. Playback Not After indicates that playback is not possible after this date and time (time period). For example, the date and time (time period) at which it becomes impossible to view rental-type content after the content becomes viewable following acquisition of a download playback license, that is, a rental period is set.

By using the License Acquisition Start, License Acquisition Limit, Playback Not Before, and Playback Not After information at the content transmitting side and receiving side, when outputting downloaded content (metadata and media files) at the content transmitting side, and recording the content onto a digitally-connected recording medium via a wired/wireless LAN or the like, information on the license acquisition time limit and view time limit can be managed. This advantageously makes it possible to achieve content protection while ensuring user convenience.

If it is found in advance that the License Acquisition Limit or Playback Not After information indicates expiration, that is, the license acquisition time limit has expired or the view time limit has expired, control may be performed so that the corresponding content is not outputted from the content transmitting side to the receiving side, or the corresponding content is outputted from the content transmitting side to the receiving side but not to be recorded at the receiving side.

Further, when content (metadata and media files) downloaded from the content transmitting side to the receiving side during a period in which the License Acquisition Limit or Playback Not After has not expired is transmitted and received, and recorded onto a recording medium at the receiving side, management of license acquisition time limit and view time limit may be performed at the receiving side on the basis of the received License Acquisition Limit or Playback Not After information, and if one or both of these time limits have expired, the downloaded content (metadata and media files) recorded on the recording medium may be deleted at the receiving side.

In this way, it is possible to achieve further user convenience and content protection.

While Count indicating the number of copies permitted and Copy_count_Mode indicating whether or not the Count information is valid are used in the above description, there is no problem even if Copy_count_Mode is not used and only Count indicating the number of copies permitted is used.

If the recording medium is a removable recording medium, another restriction is imposed in addition to those shown in Fig. 9. With regard to digital recording of program content onto a removable recording medium, in digital recording of TV or data services or digital recording of audio services, when receiving and recording "Copy One Generation" program content whose digital copy control descriptor has digital_recording_control_data = "10", it is not allowed to make three or more copies of the received content even in the case of first-generation copies (for example, when recording content by receiving a broadcast, the content cannot be recorded onto three or more recording media simultaneously). This value (3 or more in this example) may be in compliance with an applicable standard, for example. Moreover, it is not permitted to generate multiple one-generation copies in the same recording format. However, this excludes digital recording to an area inaccessible by the user for the purpose of backup. The restriction on recording to a digital recording medium is imposed for every broadcast reception unit, and if there are multiple broadcast reception units, the above restriction is imposed for each single broadcast reception unit. In the case where the receiver includes a recording format or a content protection scheme for recording which does not support
digital_recording_control_mode, for program content whose digital copy control descriptor has copy_control_type = "01" and
digital_recording_control_data = "10", content whose
digital_recording_control_mode of the content availability descriptor is "1" is handled as "Copy One Generation"
(digital_recording_control_mode = "0") and digitally recorded.

In the case where the receiver includes a recording format or a content protection scheme for recording which supports digital_recording_control_mode, content whose copy_control_type and digital_recording_control_mode of the digital copy control descriptor are "01" and "10", respectively, and whose digital_recording_control_mode of the content availability descriptor is "1" can be recorded as "Copy with Count Restriction". It should be noted, however, that it is not allowed to record the content onto a recording medium built in the receiver simultaneously with its storage onto a recording medium built in the receiver, for example.

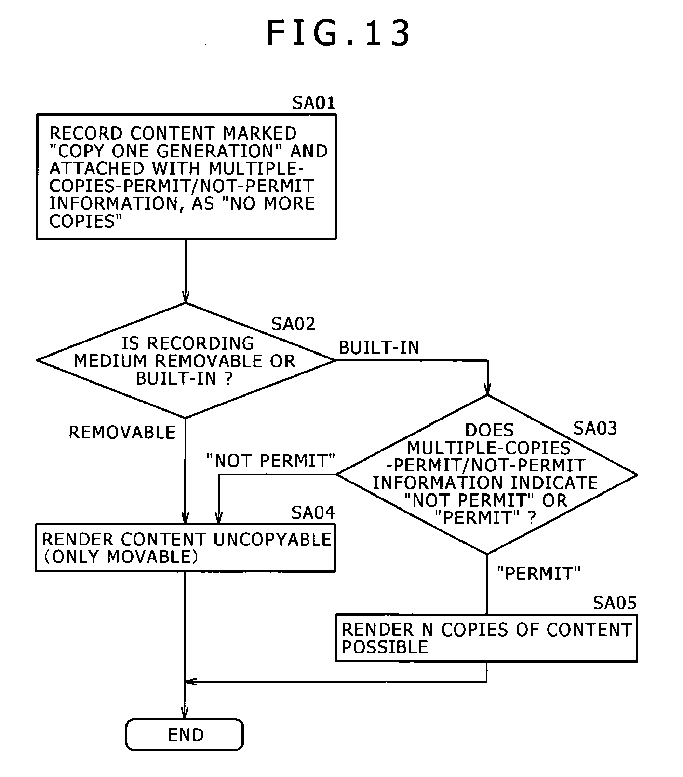

Fig. 13 is a flowchart showing an example of the procedure of creating Copy Information and Copy Count of management information when the receiver 3 records Copy One Generation program content.

When, on the basis of copy generation control information and information indicating whether or not to permit multiple copies from the separation/extraction unit 103, the content management information creation unit 119 recognizes program content as "Copy One Generation" with attached information indicating whether or not to permit multiple copies, the content management information creation unit 119 enters "01" in the Copy Information of the management information to indicate that no further copying is permitted, that is, No More Copies (SA01).

For example, the control unit 114 notifies the content management information creation unit 119 whether the recording medium onto which the program content is to be recorded is built-in or removable (SA02).

If the recording medium is removable, for example, "0" is entered in the Copy Count of the management information to render the program content uncopyable but movable (SA04). It should be noted that the difference from the above-mentioned operation of not permitting three or more copies resides in that, while the above-mentioned operation concerns, for example, copy control when receiving and recording a broadcast (when generating a first-generation copy), Fig. 13 concerns copy control after content is recorded onto a recording medium (after a first-generation copy is generated).

If the recording medium is built-in, the content management information creation unit 119 determines whether the information indicating whether or not to permit multiple copies indicates "Permit" or "Not Permit" (SA03).

If the above-mentioned information indicates "Not Permit", for example, "0" is entered in the Copy Count of the management information, thereby rendering the program content uncopyable but movable (SA04). Of course, deletion or the like is also possible.

If the above-mentioned information indicates "Not Permit", "N" is entered in the Copy Count of the management information, thereby rendering it possible to make N copies of the program content (SA05).

In this way, multiple copies can be made of already-recorded Copy One Generation program content regardless of time, which advantageously improves ease of operation. Furthermore, whether or not to permit multiple copies is determined on the basis of whether or not the recording medium is built-in or removable. If the recording medium is built-in, as described above, local encryption is applied to the program content, and encryption is further applied to the Key Information, Copy Information, and Copy Count in the management information to manage these pieces of information, thereby preventing tampering. On the other hand, if the recording medium is removable, various conceivable management methods exist. Since some of these management methods do not allow management to be performed in the same way as in the case of a built-in recording medium mentioned above, there may be situations in which tampering cannot be prevented. For this reason, the above-mentioned configuration advantageously makes it possible to achieve content protection while ensuring user convenience.

### <Copy Process Related to Copy Control Information>

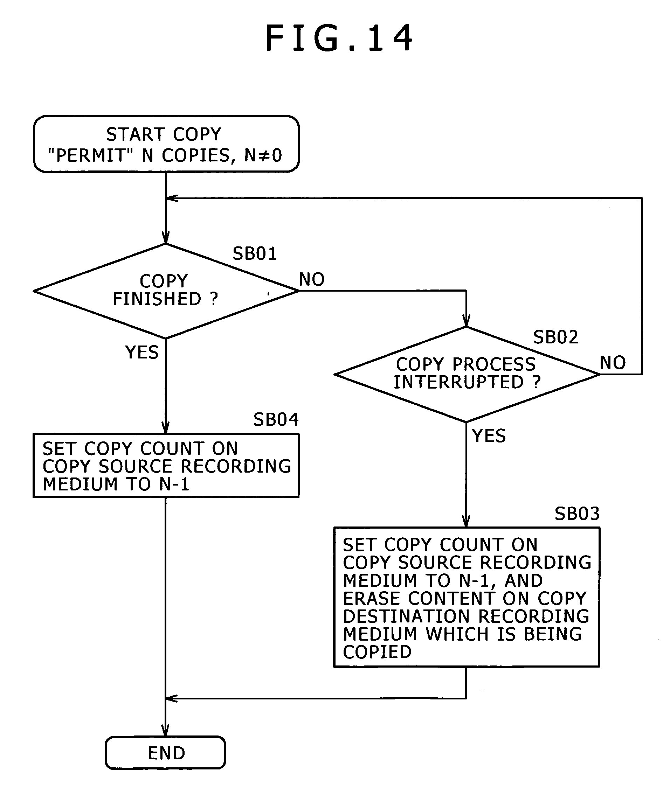

Fig. 14 is a flowchart showing an example of the procedure of copying program content by the receiver 3.

While program content whose management information indicates Copy Information = "01" (No More Copies) and Copy Count = "N" (N≠0) is copied, whether or not the copy process has been finished is monitored (SB01).

If the copy process has been finished, "N-1" (N≠0) is entered in the Copy Count of the management information on the copy source recording medium, thereby rendering it possible to make N-1 copies of the program content. In addition, "01" (No More Copies) is entered in the Copy Information of the management information on the copy destination recording medium to thereby render the program content No More Copies, and "0" is entered in the Copy Count of the management information on the copy destination recording medium to render the program content uncopyable but movable (SB04).

If the copy process has not been finished, whether or not the copy process has been interrupted is monitored (SB02).

If the copy process has not been interrupted, whether or not the copy process has been finished is monitored (SB01).

If the copy process has been interrupted, "N-1" (N≠0) is entered in the Copy Count of the management information on the copy source recording medium to thereby render it possible to make N-1 copies of the program content, and if the recording medium at the copy destination can be recorded to multiple times, the program content that is being copied is erased (SB03).

It should be noted, however, that in the case of a recording medium that can be recorded to only once, the erase process is not executed since the program content cannot be erased.

In this way, copy generation management for program content at the copy destination can be performed with reliability. In addition, even if a copy process has been interrupted for some reason, unnecessary program content does not remain at the copy destination, which saves the trouble of erasing the program content later and thus improves ease of operation. It should be noted that the above-mentioned erasure may be performed by physically erasing data on a recording medium, or by erasing the management information so that although data exists on the recording medium, the data cannot be played back (indirect erasure).

### <Move Process Related to Copy Control Information>

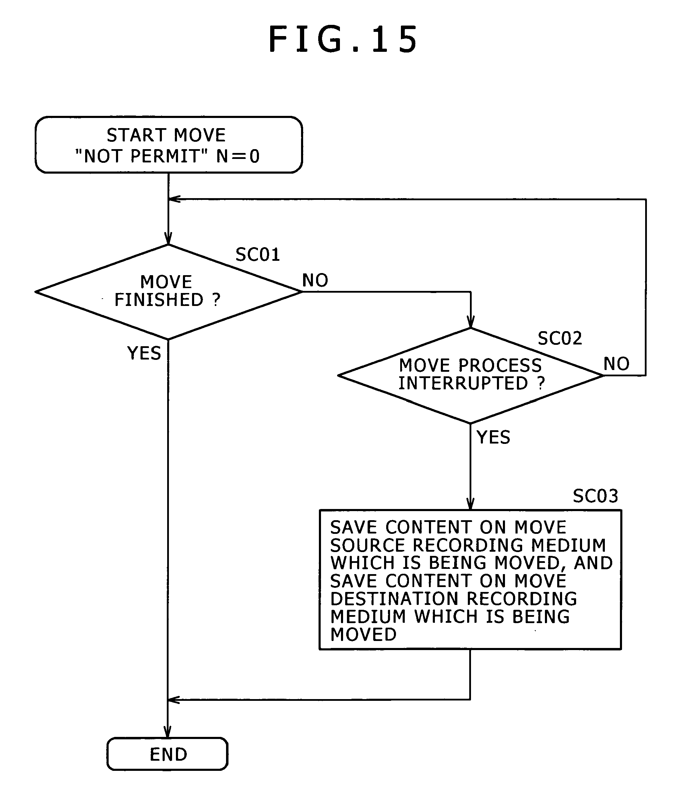

Fig. 15 is a flowchart showing an example of the procedure of moving program content by the receiver according to an embodiment.

While program content whose management information indicates Copy Information = "01" (No More Copies) and Copy Count = "0" is moved, whether or not the Move process has been finished is monitored (SC01).

If the Move process has been finished, the program content on the Move source recording medium, and management information related to this program content are erased, "01" (No More Copies) is entered in the Copy Information of the management information on the Move destination recording medium to set a No More Copies state, and "0" is entered in the Copy Count of the management information to thereby render the program content uncopyable but movable.

If the Move process has not been finished, whether or not the Move process has been interrupted is monitored (SC02).

If the Move process has not been interrupted, whether or not the Move process has been finished is monitored (SC01).

If the Move process has been interrupted, the part of the program content on the Move source recording medium which is in the process of being moved and has not yet been moved the recording medium at the Move destination, and management information related to this program content are saved, and playback of program content that has already been moved to the Move destination recording medium is disabled. The program content on the Move destination recording medium which is in the process of being moved is saved, "01" (No More Copies) is entered in the Copy Information of the management information to set a No More Copies state, and "0" is entered in the Copy Count of the management information to render the program content uncopyable but movable (SC03).

In this way, copy generation management for program content at the Move destination can be performed with reliability. In addition, even if a Move process has been interrupted for some reason, program content is saved on each of the Move source recording medium and the Move destination recording medium so that the program content does not become unviewable due to the interruption, thereby achieving improved ease of operation. It should be noted that the above-mentioned erasure may be performed by physically erasing data on a recording medium, or by erasing management information so that although data exists on the recording medium, the data cannot be played back (indirect erasure).

It should be noted that in the above description, the recording medium at the copy destination or the Move destination is a recording medium that allows management as No More Copies. If such management is impossible, the copy or Move process is prohibited.

While the above description is directed to the case of program content transmitted from a broadcast station, the present invention is also applicable to program content transmitted from an entity other than a broadcast station, such as a program content provider.

Also, a removable recording medium means a recording medium that has an independent form allowing it to be removed from the receiver, and can be played back also on another apparatus having a playback function.

Also, Move means moving "No More Copies" program content recorded on a recording medium, by copying the program content to another recording medium and then disabling playback of the program content. Disabling playback means rendering playback impossible by, for example, erasing the program content itself or by erasing an encryption key, management information, or the like. It is preferable to avoid a situation where program content exceeding 1 minute in length exists simultaneously at both the Move source and the Move destination during a Move process.

The above description is directed to the case where with respect to program content marked "Copy One Generation" and whose information indicating whether or not to permit multiple copies indicates "Permit", the determination whether or not to permit multiple copies is made on the basis of whether the recording medium is built-in or removable. Alternatively, the determination whether or not to permit multiple copies may be made on the basis of whether or not the recording medium allows management of multiple copies. In this regard, a recording medium that allows management of multiple copies refers to, for example, such a recording medium that allows the Copy Information 507, the Copy Count 508, and the Key Information 506 (other information such as the File Number 503, the Date/Time 504, the Starting Address and Record Size 505 of a data area, and the like may also be included) of the management information indicating the details of program content shown in Fig. 12 mentioned above to be managed in such a way that prevents tampering with these pieces of information.

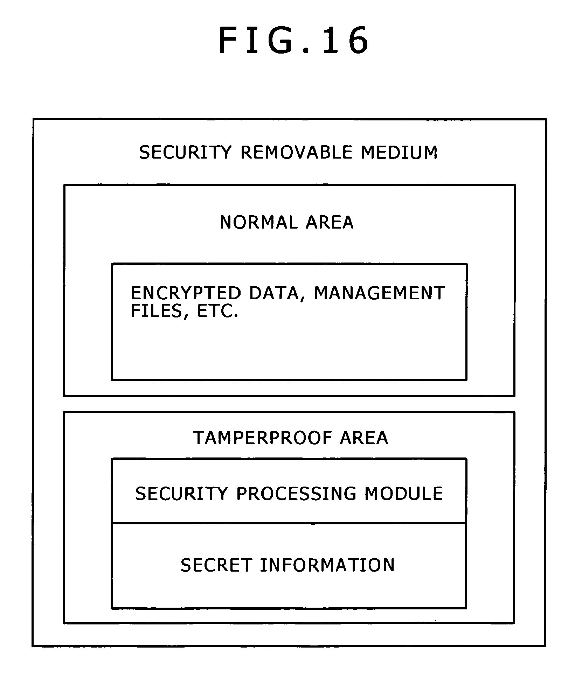

Fig. 16 shows an exemplary configuration of a recording medium (security removable medium) allowing such management of multiple copies (also referred to as copy count control or count-controlled copying). According to this configuration, a single recording medium has both a normal area accessible by the user and a tamperproof area not accessible by the user. Secret information stored in the tamperproof area becomes accessible upon successful verification of authentication through an authentication process with an apparatus capable of handling this recording medium, thereby enabling management of the secret information. Tampering is prevented by storing and managing the above-mentioned Copy Information 507, Copy Count 508, and Key Information 506 in this tamperproof area.

On the other hand, a recording medium that does not allow management of multiple copies refers to such a recording medium that does not allow the Copy Information 507, the Copy Count 508, and the Key Information 506 (other information such as the File Number 503, the Date/Time 504, the Starting Address and Record Size 505 of a data area, and the like may also be included) of the management information indicating the details of program content to be managed in such a way that prevents tampering with these pieces of information.

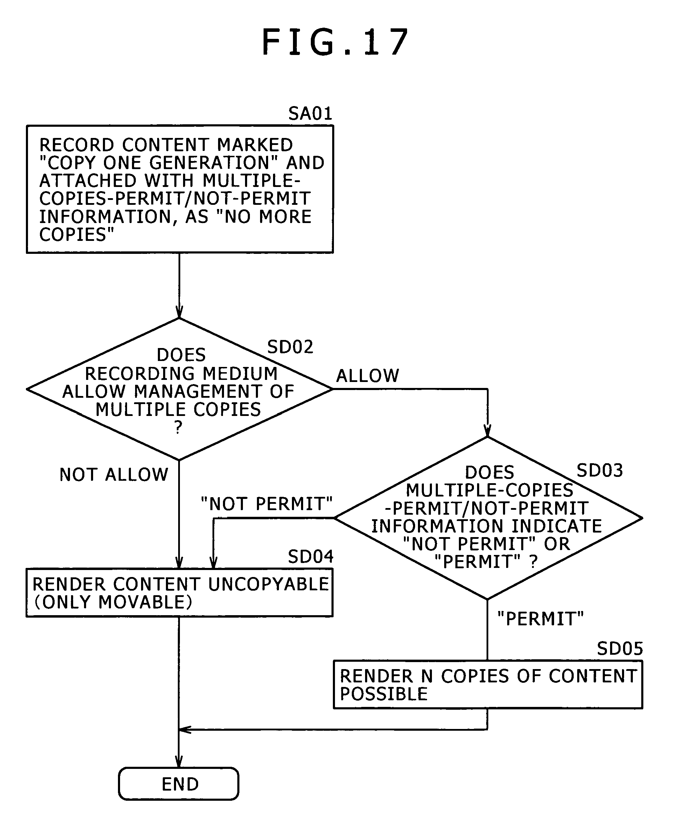

Fig. 17 is a flowchart showing an example of the procedure of creating Copy Information and Copy Count of management information when recording Copy One Generation program content in the receiver, which takes into account cases when the recording medium allows management of multiple copies and when the recording medium does not allow such management. The difference from Fig. 13 resides in SD02. It should be noted that this may be combined with Fig. 13, such as by executing SD02 when the recording medium is determined to be "removable" in SA02.

Whether the recording medium on which program content is to be recorded is a recording medium allowing management of multiple copies or a recording medium not allowing management of multiple copies is determined by, for example, the control unit 114 and notified to the content management information creation unit 119 (SD02).

If the recording medium is a recording medium not allowing management of multiple copies, for example, "0" is entered in the Copy Count of the management information, thereby rendering the program content uncopyable but movable (SD04).

If the recording medium is a recording medium allowing management of multiple copies, the content management information creation unit 119 determines whether the information indicating whether or not to permit multiple copies indicates "Permit" or "Not Permit" (SD03). If the information indicates "Not Permit", for example, "0" is entered in the Copy Count of the management information, thereby rendering the program content uncopyable but movable (SD04). If the information indicates "Permit", "N" is entered in the Copy Count of the management information to thereby render it possible to make N copies of the program content (SD05).

In this way, multiple copies can be made of already-recorded Copy One Generation program content regardless of time, which advantageously improves ease of operation. Moreover, by determining whether or not to permit multiple copies on the basis of whether the recording medium is a recording medium allowing management of multiple copies or a recording medium not allowing management of multiple copies, it is possible to prevent a situation where multiple copies to a recording medium not allowing management of multiple copies is permitted, thereby allowing program content to be protected with greater reliability.

The above description is directed to the case where, when the digital copy control information is "Copy One Generation", program content is determined to be subject to "Copy with Count Restriction" if "digital_recording_control_mode" is "1", and is determined to be not subject to "Copy with Count Restriction" if
"digital_recording_control_mode" is "0". However, for example, the determination regarding "0" and "1" may be reversed to suit the convenience of the broadcast station.

That is, when the digital copy control information is "Copy One Generation", program content may be determined to be subject to "Copy with Count Restriction" if "digital_recording_control_mode" is "0", and may be determined to be not subject to "Copy with Count Restriction" if "digital_recording_control_mode" is "1". Likewise, the settings with regard to the meanings of values indicated by other descriptors may be changed according to circumstances.

Moreover, it is desirable that the meanings of values indicated by individual descriptors, such as the value of
"digital_recording_control_mode", be uniquely determined by standardization.

The names (such as "digital_recording_control_mode" and "digital_recording_control_data") of the content availability descriptor and digital copy control descriptor need not necessarily be those used in the embodiment, and other names may be adopted.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications that fall within the ambit of the appended claims.

## Claims

1. An output control method, comprising:
receiving digital content, metadata describing information about the digital content, and license acquisition time limit information indicating a time limit until which license information on the digital content can be acquired; and
recording the digital content, the metadata, and the license acquisition time limit information onto a first recording medium, and outputting the digital content, the metadata, and the license acquisition time limit information to a second recording medium connected via a network,
wherein if the time limit indicated by the license acquisition time limit information has elapsed, the digital content is not outputted from the first recording medium to the second recording medium, and
if the time limit indicated by the license acquisition time limit information has not elapsed, the digital content is outputted from the first recording medium to the second recording medium.

2. An output control method, comprising:
receiving digital content, metadata describing information about the digital content, and license acquisition time limit information indicating a time limit until which license information on the digital content can be acquired; and
recording the digital content, the metadata, and the license acquisition time limit information onto a first recording medium, and outputting the digital content, the metadata, and the license acquisition time limit information to a second recording medium connected via a network,
wherein if the time limit indicated by the license acquisition time limit information has elapsed, the digital content is outputted from the first recording medium to the second recording medium in a state that does not allow its recording, and
if the time limit indicated by the license acquisition time limit information has not elapsed, the digital content is outputted from the first recording medium to the second recording medium in a state that allows its recording.

3. A receiving method, comprising:
receiving digital content, metadata describing information about the digital content, and license acquisition time limit information indicating a time limit until which license information on the digital content can be acquired; and
recording the digital content, the metadata, and the license acquisition time limit information onto a first recording medium, and outputting the digital content, the metadata, and the license acquisition time limit information to a second recording medium connected via a network,
wherein if the time limit indicated by the license acquisition time limit information has elapsed, the digital content is deleted from the first recording medium.

4. A receiver, comprising:
a receiving unit that receives digital content, metadata describing information about the digital content, and license acquisition time limit information indicating a time limit until which license information on the digital content can be acquired;
a recording unit that records the digital content, the metadata, and the license acquisition time limit information received by the receiving unit; and
a control unit that deletes the digital content from the first recording medium if the time limit indicated by the license acquisition time limit information has elapsed.

5. An output control method, comprising:
receiving digital content, metadata describing information about the digital content, license acquisition time limit information indicating a time limit until which license information on the digital content can be acquired, and view time limit information indicating a time limit until which the digital content can be viewed; and
recording the digital content, the metadata, the license acquisition time limit information, and the view time limit information onto a first recording medium, and outputting the digital content, the metadata, the license acquisition time limit information, and the view time limit information to a second recording medium connected via a network,
wherein if the time limit indicated by the view time limit information has elapsed, the digital content is not outputted from the first recording medium to the second recording medium, and
if the time limit indicated by the view time limit information has not elapsed, the digital content is outputted from the first recording medium to the second recording medium.

6. An output control method, comprising:
receiving digital content, metadata describing information about the digital content, license acquisition time limit information indicating a time limit until which license information on the digital content can be acquired, and view time limit information indicating a time limit until which the digital content can be viewed; and
recording the digital content, the metadata, the license acquisition time limit information, and the view time limit information onto a first recording medium, and outputting the digital content, the metadata, the license acquisition time limit information, and the view time limit information to a second recording medium connected via a network,
wherein if the time limit indicated by the view time limit information has elapsed, the digital content is outputted from the first recording medium to the second recording medium in a state that does not allow its recording, and
if the time limit indicated by the view time limit information has not elapsed, the digital content is outputted from the first recording medium to the second recording medium in a state that allows its recording.
